Europäisches Patentamt

European Patent Office

Office européen des brevets

(19)

(11) EP 0 963 701 A1

(12) **EUROPEAN PATENT APPLICATION**

(43) Date of publication:
**15.12.1999 Bulletin 1999/50**

(51) Int Cl.$^6$: **A23C 19/05**, A23C 19/09

(21) Application number: **99201847.3**

(22) Date of filing: **10.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.06.1998 NL 1009378**

(71) Applicant: **Friesland Brands B.V.**
**8937 AC Leeuwarden (NL)**

(72) Inventors:
• **Van Dijk, Pieter Ceüs**
**7423 GA Deventer (NL)**

• **Manenschijn, Jan Willem**
**7451 NE Holten (NL)**
• **Van Spronsen, Willem Andries**
**6713 AZ Ede (NL)**
• **Bonestroo, Martin Hendrik**
**7241 VL Lochem (NL)**

(74) Representative: **Ottevangers, Sietse Ulbe et al**
**Vereenigde Octrooibureaux**
**Nieuwe Parklaan 97**
**2587 BN 's-Gravenhage (NL)**

(54) **Cheese which is form-stable when heated, and process for preparing same**

(57)   The invention relates to a natural or foil cheese of the semi-hard or hard type which substantially does not flow when heated, obtainable by preparing, in an otherwise known manner, natural or foil cheese from a milk of which 20-90 wt.% is subjected to a fat globule reducing treatment, which cheese has substantially the same casein/whey protein ratio as such a cheese of the semi-hard or hard type prepared from 100% non-homogenized milk, and which cheese contains substantially no non-milk-specific proteins. Besides, the invention relates to a process for preparing a natural or foil cheese, wherein 20-90 wt.% of the cheese milk is subjected to a fat globule reducing treatment and is then combined again with the remaining cheese milk, after which a natural or foil cheese of the semi-hard or hard type is prepared in the conventional manner.

# Description

The invention relates to a natural cheese or a foil cheese which is form-stable when heated. Moreover, the invention relates to a process for preparing such a product.

Cheeses and cheese products are not only consumed or processed at room temperature. Before consumption, cheese is often subjected to a heating step. The cheese according to the present invention is intended to be heated.

Cheese and cheese products have the property of changing shape and/or structure at elevated temperature. In natural cheese, for instance, the protein matrix is disturbed, at least partially, inter alia owing to the liquefaction of fat. A partial separation of the cheese into different main fractions, in particular into a water, a fat and a protein fraction, may occur therein. This process causes the cheese, for instance, to flow, form threads and become somewhat tougher.

The above makes the taste sensation of cheese in hot dishes different from that in cold dishes. Examples of hot dishes in which cheese is used accordingly are pizzas, pastas and omelets. Furthermore, dishes are often made au gratin, that is to say provided with a layer of cheese and heated in an oven for a short time.

Moreover, the behavior of cheese at elevated temperature is utilized in the preparation of special dishes such as cheese fondues, quiches and soufflés.

However, the depicted behavior shown by cheese at elevated temperature is not always desirable.

Partly for this reason, for instance, specific types of process cheeses have been developed. In these process cheeses, the emulsion remains normally stable when heated, although process cheeses begin to flow to a greater or less degree, and mainly depending on the composition. Process cheeses are prepared by heating cheese together with all kinds of, also non-natural, additives, including melting salts. The mixture forms a melt which, after cooling, gives a stable emulsion. The additives serve, for instance, to influence the consistency, the shelf life and/or the flavor of the process cheese. Thus a great many agents are available to those skilled in the art to impart a specific property to a process cheese.

To some extent, the flowing of a process cheese can be limited by, for instance, lowering the moisture content or adjusting the acidity or the salt content. These measures, however, are usually very much at the expense of the product quality, and in the case of lowering of the moisture content, they are also economically less feasible. More in detail, the acidification and/or salting of the product in order to limit the flowing usually lead to an organoleptically hardly acceptable product. EP-A 0 761 101, for instance, describes a semi-hard cheese capable of being baked, which is partly prepared from an unripened cheese product such as curd cheese and cottage cheese. Addition of about 20% of such an unripened cheese product having a pH of about 4.5 gives a slightly brittle sourish product. Moreover, the use of such an unripened cheese product in cheesemaking is economically hardly attractive. U.S. patent 5,573,806, too, introduces heat stability by adding organic acid to the cheese milk. The "control instruments" acidity, salt content and moisture content not only give an undesirable flavor but also lead to a product having a dry, granular and/or tough mouth feel.

U.S. patent 3,962,483 describes the behavior of both cheeses and process cheeses when heated. It is indicated that natural cheeses become soft at a temperature of about 50°C and that specific hard cheeses melt at a temperature of 80-90°C. Slices of natural cheese, however, flow in but a minor degree. Process cheeses, however, melt rapidly and "run off" the base.

Furthermore, the U.S. patent indicates that natural cheeses and hard cheeses have the drawback that when heated they form threads, become tough and release whey.

It is then intended to prepare a process cheese product which is just as form-stable as the natural or hard cheese and therefore flows in but a minor degree at elevated temperature, but which does not have the drawbacks of natural or hard cheese. Subsequently, the preparation of a process cheese is presented as the invention, in which a protein coagulating at temperatures above 70°C is added to the ready process cheese product. More in detail, a process cheese is prepared first, this process cheese is cooled to a temperature below 70°C, and at this temperature a protein coagulating at temperatures above 70°C is added, after which the process cheese is once again heated to above 70°C.

As stated, a process cheese product is thus obtained which, when heated, does not become tough, does not form threads and does not release whey, but which flows just as little as natural cheese.

An improvement of the process cheese product described in US-A 3,962,483 is presented in Dutch patent application 1004257 corresponding to EP-A 0 835 611. More in particular, this application relates to a natural cheese or natural cheese product which, when heated, does not flow or at least flows substantially less, and which is prepared from a cheese milk to which a coagulable protein and therefore a non-coagulated preparation is added. Examples of protein preparations to be added, which are added in amounts of 1-10 wt.%, based on the weight of the cheese product, are chicken proteins, albumins and non-denatured whey proteins.

The object of the present invention is to provide a natural cheese or foil cheese, in particular of the semi-hard or hard type such as the Gouda type, which is intended to be heated, and which is form-stable during and after heating, and to which substantially no non-milk-specific protein preparations are added.

Surprisingly, it has now been found according to the invention that such a natural cheese or foil cheese can be obtained by preparing, in an otherwise known manner, natural or foil cheese from a milk of which 20-90 wt.%, more preferably 20-70 wt.% and most preferably 30-60 wt.% are homogenized.

Thus a natural or foil cheese of the semi-hard or hard type which substantially does not flow when heated is obtainable by preparing, in an otherwise known manner, natural cheese or foil cheese from a milk of which 20-90 wt.% is subjected to a fat globule reducing treatment, which cheese has substantially the same casein/whey protein ratio as such a cheese of the semi-hard or hard type prepared from 100% non-homogenized milk. Moreover, the cheese according to the invention contains substantially no non-milk-specific proteins.

In addition, the invention relates to a process for preparing a natural or foil cheese, in which 20-90 wt.% of the cheese milk is subjected to a fat globule reducing treatment and is then combined again with the remaining cheese milk, after which a natural or foil cheese of the semi-hard or hard type is prepared in the conventional manner.

Moreover, the invention relates to the use of homogenized milk in the preparation of natural or foil cheese for imparting substantially non-flowing properties to the cheese during heating.

In this specification, the term "natural cheese" is to be taken to mean a product obtained by coagulation of milk or buttermilk or a mixture of these raw materials, with or without milk constituents being added thereto or withdrawn therefrom; removal of whey; to which products auxiliary substances, additives or articles of food and drink, including herbs and spices, may or may not be added before, during or after the preparation.

The term "foil cheese" or "rindless cheese in foil" is to be taken to mean a cheese which may have formed no or substantially no rind, and which has to be packed in foil not later than 10 days after the first day of preparation.

These definitions have been derived from the Dutch agricultural quality decree cheese products.

The term "natural cheese product" refers to a cheese product on the basis of natural cheese which also comprises non-milk-specific, coagulable proteins or hydrolysates thereof. According to the invention, such a product is not primarily intended, although the invention is also advantageous for such products.

As already stated before, natural cheese flows at elevated temperatures. This means that the viscosity of the cheese becomes lower so that a kneadable or even a more or less liquid consistency is obtained. Mostly, threads are thereby formed, and a rupture of the protein matrix generally takes place. As a result of this rupture of the protein matrix, not only the cheese loses its shape but also the product properties such as the flavor and the mouth feel change drastically.

According to the invention, this flowing behavior of natural cheese at elevated temperatures is substantially prevented. When heating the natural cheese or the foil cheese according to the invention, for instance during cooking or baking, the cheese according to the invention is structured into a product which retains its shape and hardly, if at all, flows.

The cheese according to the invention may be baked, for instance in the form of a thick slice, in a frying-pan or on a baking tray, with or without an upper plate, preferably at a temperature of 150-250°C; or deep-fried in the form of thin slices in oil or fat at 180-200°C; or braised as small blocks in a product like "rösti" (roasted slices of potato with cheese) ; etc. Moreover, the cheese is very suitable for use in meat products like "cordon bleu" (escalope with ham and cheese), or in combination with hamburgers.

The natural cheese or foil cheese according to the invention which substantially does not flow when heated proves to retain its outer appearance when heated. Especially the dimensions of the product vary at most within very small margins to be expressed as melting percentage or melting number s defined as:

$$s = (v * 5/41) * 100\%,$$

in which

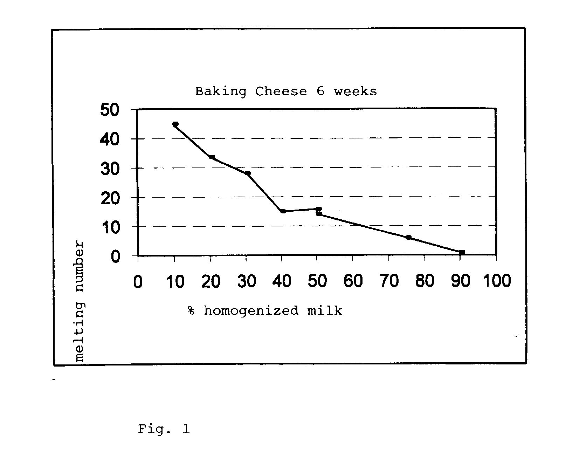

$v = (A+B+C+D+E+F)/6$, i.e. the average diameter of the sample tested according to the Schreiber test (see: Standard L.D. Schreiber Melt Test for Process Cheese in "Cheese and Fermented Milk Foods", Kosikowski F.W., 2nd ed. (1977), pages 404-406). The letters A-F thereby refer to 6 locations on the circumference of a round-cylindrical cheese sample of which the diameter is measured after heating. This is illustrated in Fig. 1, which shows a relation between the percentage of homogenized milk and s. A conventional Gouda cheese of 6 weeks has an s > 50%. The cheeses according to the invention preferably have a melting number below 35%, more preferably below 25%. The optimum combination regarding form stability and flavor (vide infra) is about the use of 50 wt.% homogenized milk. At an age of 6 weeks, s is 10-20%. Besides, s is also influenced by the composition of the cheese, and in particular the moisture, salt and fat contents and the pH.

Milk can be represented as an emulsion of fat globules in an aqueous medium. By homogenizing milk, the size of the fat globules decreases. The size of the fat globules in milk can be determined in the conventional manner, using a Laser Particle Size Analyzer (PSA), for instance the Malvern Mastersizer X. This method comprises the introduction of an emulsion or dispersion to be analyzed into a dispersion tank filled with water, from which the sample is pumped through a flow cell. The cell is irradiated with laser light. The globules present in the cell cause a diffusion of the light (refraction and diffraction). The degree of diffusion is determined by a detector via a positive lens. The intensity of the light falling on the detector, usually a diode, is decisive of the particle size distribution in the sample to be analyzed, which can be calculated according to conventional methods, for instance using the Mie theory. For non-homogenized milk a one-top particle size distribution of the Malvern curve is usually found, of which the top is usually at a particle size of 2-10 µm. After a homogenization this top will move to a value between 0.1 and 1 µm.

Essential in the process according to the invention is that a portion of the cheese milk or a portion of the cream fraction is homogenized in order to carry out a fat globule reducing treatment and is then united again with the remaining cheese milk so as to obtain a starting cheese milk which can be described as follows: a milk which, on analysis with a Laser Particle Size Analyzer such as the Malvern Mastersizer X, gives a two-top fat globule size distribution, one top being between 0.1 and 1 µm and one top above 2 µm, preferably between 2 and 10 µm. According to known methods the amount of homogenized milk can be derived from the surface below the distribution curves.

The homogenization step can be carried out by subjecting a portion of the milk (or after skimming the milk a portion of the resulting cream) at a temperature below the denaturation temperature of the milk proteins to a homogenization conventional for milk at a pressure of at least 50 kg/cm$^2$, more preferably at least 80 kg/cm$^2$ and most preferably between 125 and 250 kg/cm$^2$.

Besides, the homogenization can also be carried out using any other fat globule reducing process, for instance using ultrasound or by means of colliding liquid flows as long as a cheese milk is obtained which satisfies the above definition based on the fat globule size distribution.

It is assumed that by taking the homogenization step of the milk a cheese is obtained in which the fat globules reduced by means of homogenization are maintained to a considerable degree and begin to partly determine the structure of the cheese in the protein cross-linking occurring in the cheese formation. An indication thereof will be elaborated in one of the following examples.

Besides, it is known to prepare cheese from homogenized milk. A survey of this prior art is given by Jana and Upadhyay in the article "Homogenisation of Milk for Cheesemaking - A Review", in The Australian Journal of Dairy Technology, 47 (1992) 72-79. Described more in detail are effects caused by fully homogenized milk or separately homogenized milk (homogenization of cream fraction apart from skim milk fraction).

Peters and Moore, in J. Dairy Sci. 41 (1958), pages 70-73, use homogenization of milk to prevent, at least reduce, fat losses in the whey or fat leakage during storage of prepared cheese under less favorable conditions (room temperature).

British patent application 504,092 describes the preparation of Cheddar in which milk is skimmed, the milk is homogenized, and in which the homogenized cream is mixed with the skimmed milk. These measures serve to adjust the fat content of the cheese milk.

None of these publications describes the effect on the form stability when heating hard and semi-hard cheeses, while, furthermore, a positive effect based on the use of only a portion of the homogenized milk is not suggested in any way.

As already indicated, excellent results are obtained if 20-90 wt.% of the milk is homogenized. If less than 20 wt.% milk is homogenized, a cheese is obtained which is insufficiently form-stable after heating. Although a higher form stability is obtained if more than 90 wt.% is homogenized, a disadvantageous flavor effect occurs. A cheese of the hard or semi-hard type into which more than 90 wt.% and actually more than 70 wt.% homogenized milk is processed is too flat in flavor.

The semi-hard or hard cheese according to the invention is preferably of the Gouda or Edam type, although very good results are also obtained with Cheddar type cheeses.

The invention will now be explained in more detail by means of the following non-limitative examples.

## Example 1

Thermized cow's milk is standardized in a manner conventional for the preparation of Gouda cheese, such that a fat: protein ratio of 1:1 is obtained.

Half of this amount of cheese milk is homogenized at 60°C by means of a one-step homogenization at 200 kg/cm$^2$. Subsequently, the two batches are separately pasteurized. After cooling to coagulation temperature the two batches are brought together again.

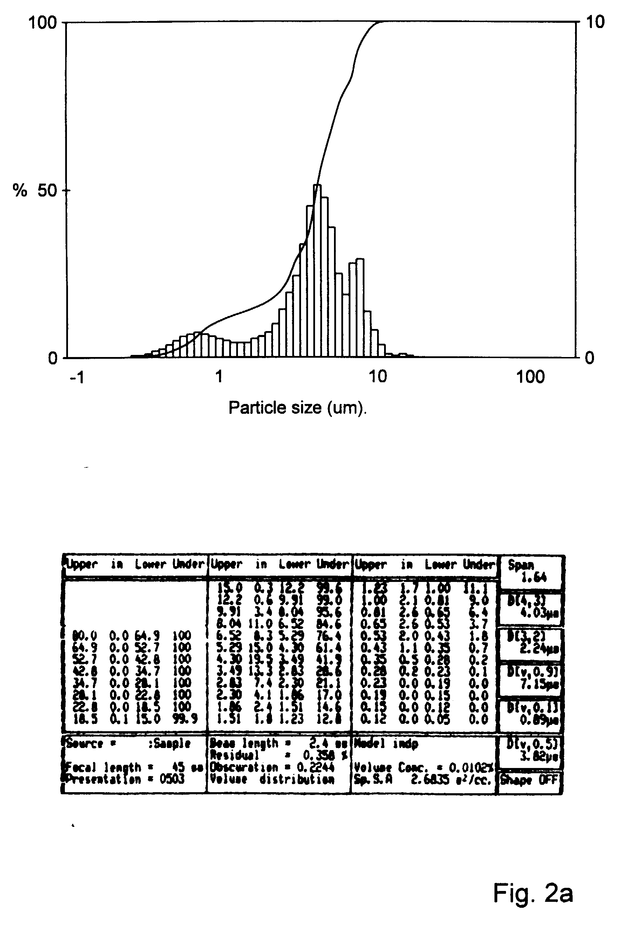

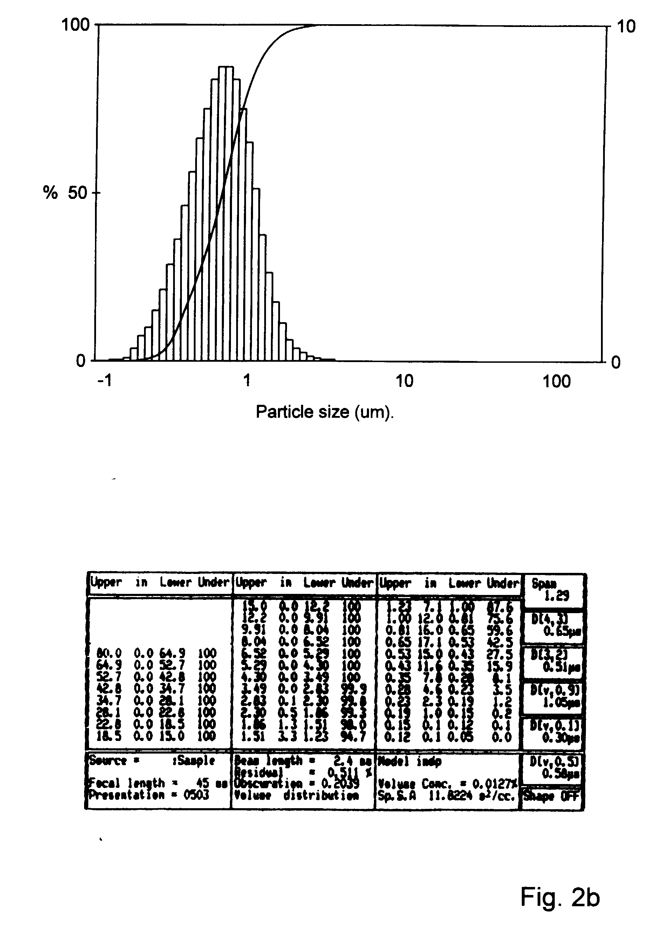

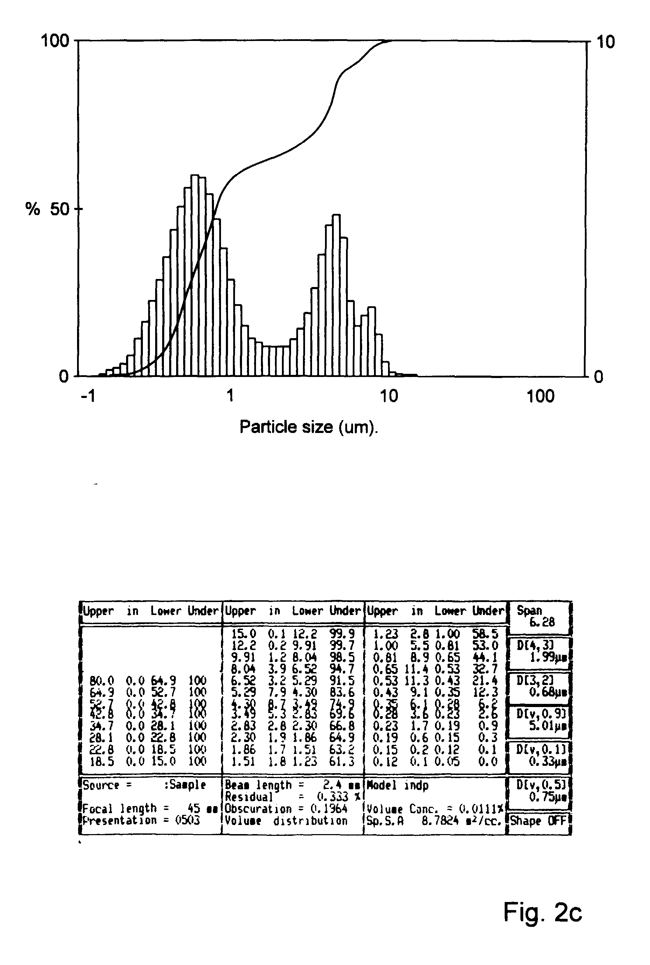

Samples of the non-homogenized, homogenized and combined cheese milk were analyzed in the conventional manner with the Malvern Mastersizer X according to the instrument manual (Malvern Instruments). The results of this analysis are shown in Figs. 2a, 2b and 2c.

From the combined cheese milk, Gouda cheeses were prepared in the conventional manner, which were ripened for six weeks after pickling.

The flavor of this cheese was somewhat flat when compared to a Gouda cheese prepared in the conventional manner. When heated to a temperature of 200°C, this cheese proved to have a melting number of 14%, while the melting number of the "normal" Gouda cheese was 63%. The baked cheese had an excellent flavor.

## Example 2

Of the cheese prepared in Example 1, the fat globule size distribution was determined according to the following method in which the Malvern Mastersizer X is used. The Malvern Mastersizer X requires that the cheese be dissolved, such that the fat globules substantially remain intact. To this end, the protein is to be replaced at the fat globule-aqueous matrix interface by Tween (60 (polyoxylene sorbitol). Tween 60 is capable of pushing away the protein from the interface, the fat globules thus becoming less sensitive to protein-dissolving agents, for instance sodium dodecyl sulfate (SDS).

More in detail, 5 g rindless cheese is milled. Subsequently, this milled cheese is suspended in 100 ml reagent (0.5 wt.% Tween 60; 0.58 wt.% sodium chloride) at 50°C using a high-speed rod mixer, for instance a turrax®. The suspension is stirred for 1 hour in a water bath of 30°C. Subsequently, 1 g SDS is added, after which another 1 hour is stirred in the same water bath.

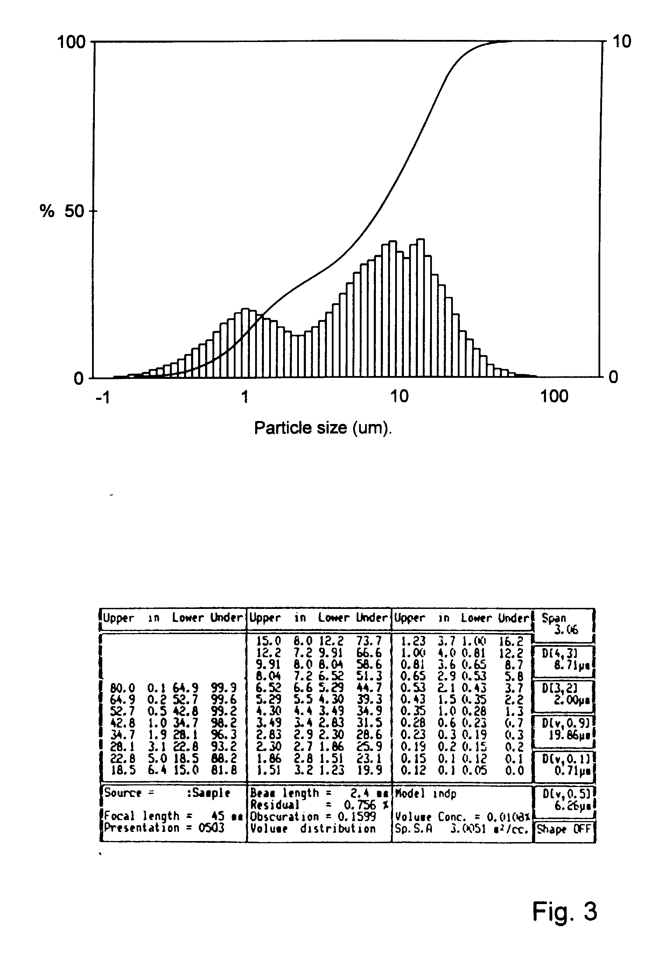

Of the thus obtained dispersion, the fat globule size was determined with a Malvern Mastersizer X. The data are shown in Fig. 3. It turns out that in the ready cheese, too, the effect of the homogenization of a portion of the cheese milk remains demonstrable.

## Claims

1. A natural or foil cheese of the semi-hard or hard type which substantially does not flow when heated, obtainable by preparing, in an otherwise known manner, natural or foil cheese from a milk of which 20-90 wt.% is subjected to a fat globule reducing treatment, which cheese has substantially the same casein/whey protein ratio as such a cheese of the semi-hard or hard type prepared from 100% non-homogenized milk, and which cheese contains substantially no non-milk-specific proteins.

2. A cheese according to claim 1, prepared from a milk of which 20-70 wt.% is homogenized.

3. A cheese according to claim 1 or 2, having a melting number s, determined according to the Schreiber test, of less than 45%.

4. A cheese according to any one of the preceding claims, having a melting number s of 10-20%.

5. A process for preparing a natural or foil cheese, wherein 20-90 wt.% of the cheese milk is subjected to a fat globule reducing treatment and is then combined again with the remaining cheese milk, after which a natural or foil cheese of the semi-hard or hard type is prepared in the conventional manner.

6. A process according to claim 5, wherein the fat globule reducing treatment is carried out at a temperature below the denaturation temperature of proteins present in the milk.

7. A process according to claim 5 or 6, wherein a homogenization step is carried out as fat globule reducing treatment.

8. A process according to claim 7, wherein the homogenization step is a one-step homogenization at a pressure of at least 50 kg/cm$^2$.

9. A process according to any one of claims 5-8, wherein the fat globule reducing treatment is carried out such that the combined cheese milk shows a two-top fat globule particle size distribution.

10. Use of homogenized milk in the preparation of natural or foil cheese for imparting substantially non-flowing properties to the cheese when heated.

Fig. 1

100 ────────────────────────────── 10

% 50

Particle size (um).

| Upper | in | Lower | Under | Upper | in | Lower | Under | Upper | in | Lower | Under | Span 1.64 |
|---|---|---|---|---|---|---|---|---|---|---|---|---|
| | | | | 15.0 | 0.3 | 12.2 | 99.6 | 1.23 | 1.7 | 1.00 | 11.1 | |
| | | | | 12.2 | 0.6 | 9.91 | 99.0 | 1.00 | 2.1 | 0.81 | 9.0 | D[4, 3] 4.03µm |
| | | | | 9.91 | 1.4 | 8.04 | 95.6 | 0.81 | 2.6 | 0.65 | 6.4 | |
| | | | | 8.04 | 11.0 | 6.52 | 84.6 | 0.65 | 2.6 | 0.53 | 3.7 | |
| 80.0 | 0.0 | 64.9 | 100 | 6.52 | 8.3 | 5.29 | 76.4 | 0.53 | 2.0 | 0.43 | 1.8 | D[3, 2] 2.24µm |
| 64.9 | 0.0 | 52.7 | 100 | 5.29 | 15.0 | 4.30 | 61.4 | 0.43 | 1.1 | 0.35 | 0.7 | |
| 52.7 | 0.0 | 42.8 | 100 | 4.30 | 19.5 | 3.49 | 41.9 | 0.35 | 0.5 | 0.28 | 0.2 | |
| 42.8 | 0.0 | 34.7 | 100 | 3.49 | 13.3 | 2.83 | 28.6 | 0.28 | 0.2 | 0.23 | 0.1 | D[v, 0.9] 7.15µm |
| 34.7 | 0.0 | 28.1 | 100 | 2.83 | 7.4 | 2.30 | 21.1 | 0.23 | 0.0 | 0.19 | 0.0 | |
| 28.1 | 0.0 | 22.8 | 100 | 2.30 | 4.1 | 1.86 | 17.0 | 0.19 | 0.0 | 0.15 | 0.0 | D[v, 0.1] 0.89µm |
| 22.8 | 0.0 | 18.5 | 100 | 1.86 | 2.4 | 1.51 | 14.6 | 0.15 | 0.0 | 0.12 | 0.0 | |
| 18.5 | 0.1 | 15.0 | 99.9 | 1.51 | 1.8 | 1.23 | 12.8 | 0.12 | 0.0 | 0.05 | 0.0 | |

| Source = :Sample | Beam length = 2.4 mm | Model indp | D[v, 0.5] 3.82µm |
|---|---|---|---|
| Focal length = 45 mm | Residual = 0.358 % | | |
| Presentation = 0503 | Obscuration = 0.2244 | Volume Conc. = 0.0102% | |
| | Volume distribution | Sp.S.A 2.6835 m²/cc. | Shape OFF |

Fig. 2a

Particle size (um).

Fig. 2b

Particle size (um).

| Upper | in | Lower | Under | Upper | in | Lower | Under | Upper | in | Lower | Under | Span 6.28 |
|---|---|---|---|---|---|---|---|---|---|---|---|---|
| | | | | 15.0 | 0.1 | 12.2 | 99.9 | 1.23 | 2.8 | 1.00 | 58.5 | |
| | | | | 12.2 | 0.2 | 9.91 | 99.7 | 1.00 | 5.5 | 0.81 | 53.0 | D[4,3] 1.99µm |
| | | | | 9.91 | 1.2 | 8.04 | 98.5 | 0.81 | 8.9 | 0.65 | 44.1 | |
| | | | | 8.04 | 3.9 | 6.52 | 94.7 | 0.65 | 11.4 | 0.53 | 32.7 | |
| 80.0 | 0.0 | 64.9 | 100 | 6.52 | 3.2 | 5.29 | 91.5 | 0.53 | 11.3 | 0.43 | 21.4 | D[3,2] 0.68µm |
| 64.9 | 0.0 | 52.7 | 100 | 5.29 | 7.9 | 4.30 | 83.6 | 0.43 | 9.1 | 0.35 | 12.3 | |
| 52.7 | 0.0 | 42.8 | 100 | 4.30 | 8.7 | 3.49 | 74.9 | 0.35 | 6.1 | 0.28 | 6.2 | D[v,0.9] 5.01µm |
| 42.8 | 0.0 | 34.7 | 100 | 3.49 | 5.3 | 2.83 | 69.6 | 0.28 | 3.6 | 0.23 | 2.6 | |
| 34.7 | 0.0 | 28.1 | 100 | 2.83 | 2.8 | 2.30 | 66.8 | 0.23 | 1.7 | 0.19 | 0.9 | |
| 28.1 | 0.0 | 22.8 | 100 | 2.30 | 1.9 | 1.86 | 64.9 | 0.19 | 0.6 | 0.15 | 0.3 | D[v,0.1] 0.33µm |
| 22.8 | 0.0 | 18.5 | 100 | 1.86 | 1.7 | 1.51 | 63.2 | 0.15 | 0.2 | 0.12 | 0.1 | |
| 18.5 | 0.0 | 15.0 | 100 | 1.51 | 1.8 | 1.23 | 61.3 | 0.12 | 0.1 | 0.05 | 0.0 | |

| | | |
|---|---|---|
| Source = :Sample | Beam length = 2.4 mm | Model indp | D[v,0.5] 0.75µm |
| | Residual = 0.333 % | | |
| Focal length = 45 mm | Obscuration = 0.1964 | Volume Conc. = 0.0111% | |
| Presentation = 0503 | Volume distribution | Sp.S.A 8.7824 m²/cc. | Shape OFF |

Fig. 2c

% 50

Particle size (um).

| Upper | in | Lower | Under | Upper | in | Lower | Under | Upper | in | Lower | Under | Span |
|---|---|---|---|---|---|---|---|---|---|---|---|---|
| | | | | | | | | | | | | 3.06 |
| | | | | 15.0 | 8.0 | 12.2 | 73.7 | 1.23 | 3.7 | 1.00 | 16.2 | |
| | | | | 12.2 | 7.2 | 9.91 | 66.6 | 1.00 | 4.0 | 0.81 | 12.2 | D[4,3] |
| | | | | 9.91 | 8.0 | 8.04 | 58.6 | 0.81 | 3.6 | 0.65 | 8.7 | 8.71µa |
| | | | | 8.04 | 7.2 | 6.52 | 51.3 | 0.65 | 2.9 | 0.53 | 5.8 | |
| 80.0 | 0.1 | 64.9 | 99.9 | 6.52 | 6.6 | 5.29 | 44.7 | 0.53 | 2.1 | 0.43 | 3.7 | D[3,2] |
| 64.9 | 0.2 | 52.7 | 99.6 | 5.29 | 5.5 | 4.30 | 39.3 | 0.43 | 1.5 | 0.35 | 2.2 | 2.00µa |
| 52.7 | 0.5 | 42.8 | 99.2 | 4.30 | 4.3 | 3.49 | 34.9 | 0.35 | 1.0 | 0.28 | 1.3 | |
| 42.8 | 1.0 | 34.7 | 98.2 | 3.49 | 3.4 | 2.83 | 31.5 | 0.28 | 0.6 | 0.23 | 0.7 | D(v,0.9) |
| 34.7 | 1.9 | 28.1 | 96.3 | 2.83 | 2.9 | 2.30 | 28.6 | 0.23 | 0.3 | 0.19 | 0.3 | 19.86µa |
| 28.1 | 3.1 | 22.8 | 93.2 | 2.30 | 2.7 | 1.86 | 25.9 | 0.19 | 0.2 | 0.15 | 0.2 | |
| 22.8 | 5.0 | 18.5 | 88.2 | 1.86 | 2.8 | 1.51 | 23.1 | 0.15 | 0.1 | 0.12 | 0.1 | D(v,0.1) |
| 18.5 | 6.4 | 15.0 | 81.8 | 1.51 | 3.2 | 1.23 | 19.9 | 0.12 | 0.1 | 0.05 | 0.0 | 0.71µa |

| Source = :Sample | Beam length = 2.4 aa | Model indp | D(v,0.5) |
|---|---|---|---|
| | Residual = 0.756 % | | 6.26µa |
| Focal length = 45 aa | Obscuration = 0.1599 | Volume Conc. = 0.0108% | |
| Presentation = 0503 | Volume distribution | Sp.S.A 3.0051 a²/cc. | Shape OFF |

Fig. 3

**European Patent Office**

## EUROPEAN SEARCH REPORT

Application Number

EP 99 20 1847

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | I. PEETERS: "Studies related to the manufacture of swiss-type cheese. Use of homogenized milk." JOURNAL OF DAIRY SCIENCE, vol. 41, 1958, pages 70-73, XP002091261 CHAPAIGN, ILLINOIS US | 1-9 | A23C19/05 A23C19/09 |
| A | * page 70, paragraph 1; tables 2,3 * | 10 | |
| X,D | US 5 573 806 A (N. FARKYE) 12 November 1996 (1996-11-12) | 10 | |
| A | * column 14; claim 1; example X; table 15 * | 1 | |
| X | JANA A H ET AL: "A comparative study of the quality of Mozzarella cheese obtained from unhomogenized and homogenized buffalo milks." CULTURED DAIRY PRODUCTS JOURNAL, vol. 28, no. 1, 1993, pages 16, 18, 20-22, XP002116446 Dep. of Dairy Tech., SMC Coll. of Dairy Sci., GAU, Anand Campus, Anand 388 110 Gujarat, India * page 22 - page 23; table 2 * | 10 | TECHNICAL FIELDS SEARCHED (Int.Cl.6) A23C |
| X | TUNICK M H ET AL: "Effects of skim milk homogenization on proteolysis and rheology of Mozzarella cheese." INTERNATIONAL DAIRY JOURNAL, vol. 5, no. 5, 1995, pages 483-491, XP002116415 E. Reg. Res. Cent., ARS, USDA, 600 East Mermaid Lane, Philadelphia, PA 19118, USA * page 487; table 2 * | 10 | |

-/--

The present search report has been drawn up for all claims

| Place of search | Date of completion of the search | Examiner |
|---|---|---|
| THE HAGUE | 24 September 1999 | Desmedt, G |

EPO FORM 1503 03.82 (P04C01)

EP 0 963 701 A1

| | European Patent Office | EUROPEAN SEARCH REPORT | Application Number<br>EP 99 20 1847 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | JANA A H ET AL: "THE EFFECTS OF HOMOGENIZATION CONDITIONS ON THE TEXTURAL AND BAKING CHARACTERISTICS OF BUFFALO MILK MOZZARELLA CHEESE" AUSTRALIAN JOURNAL OF DAIRY TECHNOLOGY, vol. 46, no. 1, 1 May 1991 (1991-05-01), pages 27-30, XP000214448 ISSN: 0004-9433 | 10 | |
| A | * page 27 - page 28; table 3 * | 1,8 | |
| A | WO 95 35034 A (A. BRATLAND) 28 December 1995 (1995-12-28) * claims 1-8; example 1 * | 1 | |
| A,D | GB 504 092 A (H. WILSON) * claims 1-5 * | 1 | |
| A,D | JANA A H ET AL: "HOMOGENISATION OF MILK FOR CHEESEMAKING - A REVIEW" AUSTRALIAN JOURNAL OF DAIRY TECHNOLOGY, vol. 47, no. 1, 1 May 1992 (1992-05-01), pages 72-79, XP000273050 * the whole document * | 1 | TECHNICAL FIELDS SEARCHED (Int.Cl.6) |
| A,D | EP 0 835 611 A (FRIESLAND BRANDS) 15 April 1998 (1998-04-15) & NL 1 004 257 A | 1 | |

The present search report has been drawn up for all claims

| Place of search | Date of completion of the search | Examiner |
|---|---|---|
| THE HAGUE | 24 September 1999 | Desmedt, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

## ANNEX TO THE EUROPEAN SEARCH REPORT
## ON EUROPEAN PATENT APPLICATION NO.

EP 99 20 1847

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-1999

| Patent document cited in search report | | Publication date | Patent family member(s) | | Publication date |
|---|---|---|---|---|---|
| US 5573806 | A | 12-11-1996 | US | 5445845 A | 29-08-1995 |
| WO 9535034 | A | 28-12-1995 | AU | 2884795 A | 15-01-1996 |
| | | | CA | 2193074 A | 28-12-1995 |
| | | | EP | 0769912 A | 02-05-1997 |
| GB 504092 | A | | NONE | | |
| EP 835611 | A | 15-04-1998 | NL | 1004257 C | 15-04-1998 |

EPO FORM P0459

For more details about this annex : see Official Journal of the European Patent Office, No. 12/82